# EUROPÄISCHE PATENTSCHRIFT

(11) **EP 2 730 201 B1**
(45) Veröffentlichungstag und Bekanntmachung des Hinweises auf die Patenterteilung: **07.01.2015**
(21) Anmeldenummer: 13184445.8
(22) Anmeldetag: 13.09.2013
(51) Int. Cl.: A47J 31/44

(54) **Milchaufschäumvorrichtung zum Betreiben mit einer Kaffeemaschine sowie Kaffeemaschine**
Milk foaming device for operation with a coffee machine and coffee machine
Dispositif de production d'une émulsion de lait destiné à fonctionner avec une machine à café et machine à café

(30) Priorität: 13.11.2012 DE 102012110885
(43) Veröffentlichungstag der Anmeldung: 14.05.2014
(73) Patentinhaber: Eugster/Frismag AG, 8580 Amriswil (CH)
(72) Erfinder: Meier, Marco, 8634 Hombrechtikon (CH)
(74) Vertreter: Wagner, Kilian

(56) Entgegenhaltungen:
- EP-A2- 1 374 748
- US-A- 4 061 142

## Beschreibung

Die Erfindung betrifft eine Milchaufschäumvorrichtung zum Betreiben mit einer Kaffeemaschine gemäß dem Oberbegriff des Anspruchs 1, wobei die Milchaufschäumvorrichtung einen Dampfanschluss zum Verbinden mit einer Dampfversorgungsleitung der Kaffeemaschine aufweist sowie eine Milchleitung zum Fördern von aufzuschäumender Milch aus einem separaten oder integrierten Milchbehälter zu Aufschäummitteln der Milchaufschäumvorrichtung, wobei der Milchleitung der Milchaufschäumvorrichtung ein Ventil zur Einstellung der Durchflussmenge zugeordnet ist, welches einen Eingriffsbereich zum Zusammenwirken mit außerhalb der Milchaufschäumvorrichtung in der Kaffeemaschine angeordneten Aktormitteln zum Betätigen des Ventils aufweist. Ferner betrifft die Erfindung eine Kaffeemaschine gemäß Anspruch 9, umfassend eine abnehmbar anordenbare Milchaufschäumvorrichtung nach dem Konzept der Erfindung.

Es ist bekannt, an Kaffeemaschinen, insbesondere Kaffeevollautomaten lösbar festlegbare Milchschäumvorrichtungen mit einem Ventil zur Einstellung der Durchflussmenge der Milchleitung zu versehen, insbesondere mit dem Ziel, über die Durchflussmenge der durch die Milchleitung angesaugten Milch die Milch- und/oder resultierende Schaumtemperatur zu beeinflussen, wobei allgemein gilt, dass die Temperatur des Schaums oder der Milch umso höher ist, je geringer die eingestellte Durchflussmenge ist. Bei einer einfachen bekannten Ausführungsform handelt es sich um ein manuell betätigbares Ventil, welches vom Nutzer von Hand betätigbar ist.

Um den Temperatureinstellvorgang für den Benutzer komfortabler zu gestalten sind Lösungen bekannt geworden, bei denen das milchaufschäumvorrichtungsseitige Ventil mit Hilfe eines Elektromotors automatisiert betätigbar ist.

Aus der US 2010/0212508 A1 ist eine Kaffeemaschine mit (fest) integrierter Milchaufschäumvorrichtung bekannt, welcher ein Elektromotor zugeordnet ist, mit welchem ein Schaft zwischen unterschiedlichen Positionen verstellbar ist, u.a. um den Milchdurchsatz einstellen zu können. Der Schaft ist mit einer Rotationsmimik verbunden die unmittelbar mit der angesaugten Milch in Kontakt kommt und, mit welcher Ventilöffnungen teilweise oder vollständig verschlossen werden können. Verbesserungsbedürftig scheint hier die Reinigbarkeit der Milchaufschäumvorrichtung. Auch ist die bekannte Ventilanordnung hinsichtlich ihrer Robustheit und Zuverlässigkeit verbesserungsbedürftig, da die Gefahr besteht, dass sich Komponenten des Ventils bei einer Reinigung in der Spülmaschine verziehen, so dass nach Reinigungsvorgängen möglicherweise Toleranzgrenzen nicht mehr eingehalten werden.

Aus der DE 10 2009 019 614 A1 ist eine Vorrichtung zur Ausgabe von Milch oder Milchschaum bekannt, bei welcher zur Regulierung des Milchflusses in eine Mischkammer ein Quetschventil vorgesehen ist. Hierzu ist der Milchzuführkanal mittels eines linear verstellbaren Druckstücks quetschbar. Solche Linearantriebe sind anfällig für ein Verkanten, insbesondere bei Verschmutzung oder eines temperaturbedingten Verziehens, wie dies nach einer Spülmaschinenreinigung auftreten kann. Bei gegebenenfalls vorgesehener Führung für das Druckstück besteht zudem die Gefahr der Verschmutzung im Führungsbereich.

Zum weiteren Stand der Technik werden die EP 1374748 A2, die US 4061142, die DE 20 2011 051 719 U1, die WO 2008/071024 A1, die DE 603 13 495 T2 sowie die DE 10 2008 042 276 A1 genannt.

Ausgehend von dem vorgenannten Stand der Technik liegt der Erfindung die Aufgabe zugrunde eine hinsichtlich ihrer Reinigbarkeit und Schmutzanfälligkeit verbesserte Milchaufschäumvorrichtung anzugeben, die sich dazu durch eine hohe Robustheit auszeichnet und bevorzugt zur Reinigung in einer Haushaltsspülmaschine geeignet und bestimmt ist. Ferner besteht die Aufgabe darin eine zur Betätigung einer derartigen Milchaufschäumvorrichtung ausgebildete Kaffeemaschine, insbesondere einen Kaffeevollautomaten mit lösbar daran festgelegter und/oder legbarer Milchaufschäumvorrichtung anzugeben.

Diese Aufgabe wird hinsichtlich der Milchaufschäumvorrichtung mit den Merkmalen des Anspruchs 1 und hinsichtlich der Kaffeemaschine mit den Merkmalen des Anspruchs 9 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung hat zunächst erkannt, dass es für eine optimale Reinigbarkeit unerlässlich ist, die bevorzugt elektrischen Aktormittel räumlich von der Milchaufschäumvorrichtung zu trennen, d.h. diese Aktuatormittel nicht in der Milchaufschäumvorrichtung anzuordnen, sondern stattdessen in der Kaffeemaschine um die Milchaufschäumvorrichtung nicht mit elektrischen Komponenten versehen zu müssen, was zum einen zu einem einfachen und robusten Aufbau der Milchaufschäumvorrichtung führt und darüber hinaus dazu, dass diese ohne weitere Maßnahmen verbessert leichter ist. Insbesondere besteht nicht die Notwendigkeit, den Elektromotor für die Reinigung der Milchschäumvorrichtung, beispielsweise in einer Spülmaschine zu kapseln. Die Erfindung hat weiter erkannt, dass vorstehende Maßnahme alleine nicht ausreichend ist, um die der Erfindung zugrundeliegende Aufgabe zu lösen. Vielmehr muss erfindungsgemäß hinzutreten, dass das Ventil als Quetschventil ausgebildet ist und die Milchleitung einen Teil des Quetschventils selbst bildet, indem diese durch Kraftbeaufschlagung mittels der kaffeemaschinenseitigen Aktormittel deformierbar ist, um dadurch im Ergebnis den Durchflussquerschnitt der Milchleitung zu variieren. Bevorzugt handelt es sich bei der abschnittsweise als Quetschventil ausgebildeten Milchleitung um eine Ansaugleitung zum Ansaugen von Milch aus einem in die Milchaufschäumvorrichtung integrierten oder einem von dieser separaten Milchbehältnis. Die Krafteinwirkung auf die Milchleistung kann unmittelbar durch die Aktormittel erfolgen oder, was bevorzugt ist mittelbar, wie später noch erläutert werden wird. Jedenfalls ist dem Quetschventil, genauer der Milchleitung unmittelbar oder, bevorzugt mittelbar ein Eingriffsbereich zugeordnet, der derart ausgebildet und angeordnet ist, dass die Aktormittel zur Kraftbeaufschlagung der Milchleitung mit dieser bei an der Kaffeemaschine lösbar montierter Milchaufschäumvorrichtung in Wechselwirkung treten können. Insgesamt wird durch die Kombination vorstehender Maßnahmen eine Milchaufschäumvorrichtung zum Betreiben mit einer Kaffeemaschine erhalten, die durch Abnehmen von der Kaffeemaschine separat von dieser reinigbar ist und die keine elektrischen Komponenten enthält, die anfällig für eine derartige Reinigung wären, wobei sich die Milchaufschäumvorrichtung durch ein Quetschventil auszeichnet, dessen Bestandteil die Milchleitung der Milchaufschäumvorrichtung ist, um somit eine unmittelbare Wechselwirkung der Aktormittel mit der Milch zu vermeiden, da aufgrund der Ausbildung des Ventils als Quetschventil ausschließlich von außen auf die Milchleitung eingewirkt wird, um den Durchflussquerschnitt und damit die Durchflussmenge und im Ergebnis auch die Milch- oder Schaumtemperatur zu beeinflussen.

Grundsätzlich wäre es möglich, wie zuvor erwähnt, unmittelbar mit Hilfe der, insbesondere einen linear verstellbaren Abschnitt aufweisenden Aktormittel auf die Milchleitung einzuwirken. Hierzu müsste der Eingriffsbereich für die Aktormittel unmittelbar an der Milchleitung ausgebildet sein. Um dies zu vermeiden wäre es alternativ möglich den Eingriffsbereich an einem linearverstellbaren Bauteil, insbesondere einem Schieber- oder Stößelabschnitt der Milchaufschäumvorrichtung angreifen zu lassen, der dann wiederum die Milchleitung kraftbeaufschlagt. Erfindungsgemäß wird dies jedoch vermieden und stattdessen ein Schwenkteil vorgesehen, welches durch Kraftbeaufschlagung mittels der Aktormittel um eine Schwenkachse verschwenkbar ist, um dann im Ergebnis auf den Milchleitungsquerschnitt von außen einzuwirken. Diese zunächst aufwändig anmutende erfindungsgemäße Maßnahme bringt jedoch überraschende Vorteile hinsichtlich der Robustheit und Spülmaschinentauglichkeit mit sich, da durch das Vorsehen eines Schwenkmechanismus anstelle eines Schiebers od.dgl. die Gefahr einer Verkantung eines Schiebers vermieden wird, wie diese, insbesondere nach einer Spülmaschinenreinigung aufgrund eines temperaturbedingten Verziehens auftreten kann und/oder durch Verschmutzungen im Führungsbereich.

Bevorzugt sind die Aufschäummittel nach dem Venturiprinzip arbeitend ausgebildet, wobei durch an einer Venturidüse vorbeiströmenden Dampf Milch durch die Milchleitung in eine Aufwärm- und/oder Aufschäumkammer der Milchaufschäummittel einleitbar ist, und wobei bevorzugt die Milch in der Aufschäumkammer mittels des Dampfes turbulent verwirbelt und dadurch aufgeschäumt wird. Ganz besonders zweckmäßig ist es, wenn die Milchaufschäumvorrichtung zusätzlich eine Luftansaugöffnung, insbesondere einen Luftansauganschluss zur Verbindung mit der Kaffeemaschine aufweist, durch den Luft in die vorgenannte Aufwärm- und/oder Aufschäumkammer einleitbar ist, um das Aufschäumergebnis zu beeinflussen. Bevorzugt ist dieser Ansaugöffnung bzw. dem Ansauganschluss, bevorzugt kaffeemaschinenseitig eine, bevorzugt automatisiert betätigbare Ventilanordnung zugeordnet, um die Menge angesaugter Luft und damit das Aufschäum- und/oder Erwärmungsergebnis beeinflussen zu können.

Besonders zweckmäßig ist es, wenn die Milchaufschäumvorrichtung einen eigenen, d.h. von einem Kaffeeauslass der Kaffeemaschine separaten Auslass für heiße Milch und/oder Schaum aufweist, durch den die erhitzte Milch und/oder der Schaum unmittelbar in ein Trinkgefäß strömen kann, um hierdurch die Kaffeemaschine nicht mit Milchresten zu beaufschlagen.

Ganz besonders bevorzugt ist eine Ausführungsform der Milchaufschäumvorrichtung, bei der das vorerwähnte Schwenkteil über Federmittel aus einer die Milchleitung deformierenden Position in eine Ausgangsposition zurückverschwenkbar angeordnet ist, wobei es besonders zweckmäßig ist, wenn diese Federmittel unmittelbar von der Milchleitung selbst gebildet sind und noch weiter bevorzugt keine darüber hinausgehenden Federmittel vorgesehen werden, um die Robustheit und Reinigbarkeit weiter zu optimieren. Anders ausgedrückt ist das Schwenkteil ist mit Hilfe der Aktormittel entgegen der Federkraft der Federmittel verschwenkbar. Durch die Realisierung der Federmittel wird sichergestellt, dass die Aktuatormittel immer an derselben Position auf das Schwenkteil treffen oder was bevorzugt ist, dass das Schwenkteil, zumindest über einen Teil der Verstellstrecke der Aktormittel in andauerndem Kontakt zu den Aktormitteln ist, insbesondere derart, dass sich der Eingriffsbereich auch in zurückgezogener Position der Aktormittel in Kontakt mit diesen befindet

Besonders bevorzugt ist eine Ausführungsform, bei welcher das Schwenkteil einen Gehäuseabschnitt der Milchaufschäumvorrichtung bildet und somit unmittelbar durch eine Bedienperson mechanisch gereinigt werden kann.

In Weiterbildung der Erfindung ist mit Vorteil vorgesehen, dass das Gehäuse zwei Gehäuseschalen umfasst, insbesondere ausschließlich zwei Gehäuseschalen, die gemeinsam, ggf. zusammen mit dem zuvor erwähnten Schwenkteil das Gehäuse bilden und die sämtliche Einzelteile der Milchaufschäumvorrichtung positionieren bzw. fixieren, so dass eine für den Benutzer nicht demontierbare Einheit geschaffen wird, die trotz dieser Kompaktheit gut reinigbar sowie robust und spülmaschinenbeständig ist.

Konstruktiv als besonders vorteilhaft hat es sich herausgestellt, wenn sich das Schwenkteil in Richtung einer Längserstreckung der Milchleitung erstreckt, insbesondere bei montierter Milchaufschäumvorrichtung in einer Horizontalrichtung, und dass die Schwenkachse des Schwenkteils rechtwinklig zu vorstehender Längserstreckung ausgebildet ist, insbesondere in der vorerwähnten Horizontalebene.

Damit eine Deformation der Milchleitung mit möglichst geringem Kraftaufwand möglich ist, was den Einsatz von Motoren der Aktormittel mit kleiner Leistungsaufnahme ermöglicht, ist in Weiterbildung der Erfindung mit Vorteil vorgesehen, dass der Deformationsabschnitt der Milchleitung, der vorzugsweise mittels eines vorerwähnten Schwenkteils deformierbar ist, eine geringere Wandstärke aufweist als ein benachbarter, insbesondere angrenzender Milchleitungsabschnitt. Dies kann konstruktiv dadurch einfach gelöst werden, indem der vorgenannte, eine geringere Wandstärke aufweisende Deformationsabschnitt, bevorzugt zusammen mit dem benachbarten, eine größere Wandstärke aufweisenden Milchleitungsabschnitt von einem Formteil, insbesondere aus einem Elastomermaterial, bevorzugt aus einem Silikonmaterial gebildet ist. Insbesondere dann, wenn sowohl der Deformationsabschnitt als auch ein Milchleitungsabschnitt mit größerer Wandstärke von einem gemeinsamen Bauteil gebildet sind, wirkt sich dies positiv auf eine geringere Verschmutzungsneigung und eine erleichterte Reinigbarkeit sowie Robustheit der Milchaufschäumvorrichtung aus.

Um die Milchaufschäumvorrichtung lösbar an der Kaffeemaschine festlegen zu können, sind in Weiterbildung der Erfindung entsprechende Befestigungsmittel, insbesondere Rastmittel vorgesehen, wobei es sich hierbei beispielsweise um Federmittel bzw. federnde Rastmittel handeln kann und/oder um mindestens eine Aufnahme zur Aufnahme entsprechender federnder Rastmittel der Kaffeemaschine. Selbstverständlich sind alternative Ausführungen der Befestigungsmittel realisierbar, wobei es besonders zweckmäßig ist, wenn diese insgesamt so gestaltet sind, dass eine werkzeuglose manuelle Befestigung und Lösung der Milchaufschäumvorrichtung von der Kaffeemaschine möglich ist.

Die Erfindung führt auch auf eine, bevorzugt als Kaffeevollautomat oder als Kapselmaschine ausgebildete Kaffeemaschine, wobei die Kaffeemaschine erfindungsgemäß Dampferzeugungsmittel aufweist, um die Milchaufschäumvorrichtung mit Dampf zum Erhitzen und/oder Aufschäumen der Milch versorgen zu können. Darüber hinaus umfasst die Kaffeemaschine Aktormittel zur Betätigung des Quetschventils der Milchaufschäumvorrichtung sowie eine Aufnahme, d.h. einen Platz zum lösbaren Festlegen der Milchaufschäumvorrichtung, wobei der Dampfanschluss bei an der Kaffeemaschine festgelegter Milchaufschäumvorrichtung dampfleitend mit den Dampferzeugungsmitteln der Kaffeemaschine verbunden ist und zudem die Aktormittel mit dem Eingriffsbereich der Milchaufschäumvorrichtung wirkverbunden oder bei Betätigung der Aktormittel mit diesen wirkverbindbar sind.

Als besonders vorteilhaft hat es sich herausgestellt, wenn die kaffeemaschinenseitigen Aktormittel einen Elektromotor, ganz besonders einen Schrittmotor umfassen, dessen Rotationsbewegung in an sich bekannter Weise, beispielsweise über einen Spindeltrieb od. dgl. Getriebeanordnung in eine translatorische Verstellung eines Linearstellgliedes zum Zusammenwirken mit dem Eingriffsbereich des Quetschventils der Milchaufschäumvorrichtung aufweist.

Um eine gute Passgenauigkeit bzw. mechanische Zusammenwirkung des Linearstellgliedes mit dem Eingriffsbereich der Aufschäumvorrichtung zu garantieren ist es besonders bevorzugt, wenn hier eine konvex-konkav Paarung realisiert ist, wobei es besonders zweckmäßig ist, wenn das Linearstellglied konvex gerundet ausgebildet ist und der Eingriffsbereich eine konkave Vertiefung aufweist, wobei es in Bezug auf die Ausbildung der Milchaufschäumvorrichtung von besonderem Vorteil ist, wenn der Eingriffsbereich unmittelbar an einem im Zusammenhang mit der Milchaufschäumvorrichtung offenbarten Schwenkteil ausgebildet ist.

Die Aktormittel sind weiterbildungsgemäß über Steuermittel ansteuerbar, die die Aktormittel in Abhängigkeit einer nutzerseitigen Vorgabe, insbesondere eines Reinigungsbefehls, eines Temperaturbefehls oder eines Milch- oder Schaumauswahlbefehls auf das Quetschventil ansteuernd. Über die Aktormittel kann der Querschnitt des Quetschventils bevorzugt auch bis auf null reduziert werden, wobei es besonders bevorzugt ist, wenn die Aktormittel beliebige oder ausgewählte (vordefinierte) Zwischenstufen anfahren können.

Zum Erhöhen der Sicherheit der Kaffeemaschine für den Nutzer ist es besonders zweckmäßig, wenn der Milchaufschäumvorrichtung Detektionsmittel zugeordnet sind, die detektieren, ob die Milchaufschäumvorrichtung überhaupt und/oder korrekt an der Kaffeemaschine angebracht ist, um somit insbesondere einen Dampfausstoß zu vermeiden, falls dies nicht der Fall sein sollte. Die Detektionsmittel können dabei beispielsweise einen Druckschalter od. dgl. umfassen.

Als besonders zweckmäßig hat es sich herausgestellt, wenn die Milchaufschäumvorrichtung hinter einer, insbesondere abnehmbaren und/oder verstellbaren Blende der Kaffeemaschine anordenbar ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Frontansicht auf eine Kaffeemaschine mit lösbar daran angeordneter Milchaufschäumvorrichtung,
- Fig. 2:: eine Anordnung kaffeemaschinenseitiger Aktormittel und Milchaufschäumvorrichtung, und
- Fig. 3:: eine horizontale Längsschnittansicht durch die Milchaufschäumvorrichtung gemäß Fig. 2 mit angrenzendem Linearversteller der Aktormittel.

In den Figuren sind gleiche Elemente und Elemente mit der gleichen Funktion mit den gleichen Bezugszeichen gekennzeichnet,

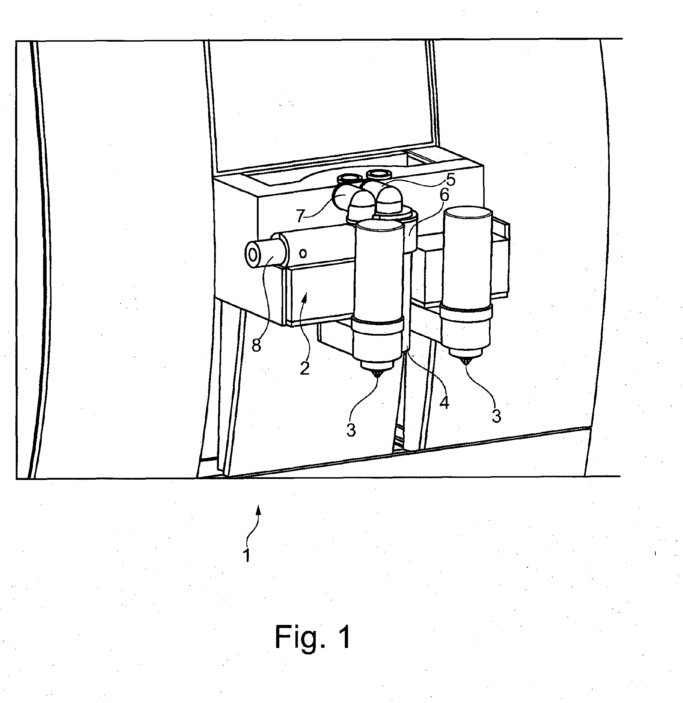

In Fig. 1 ist eine Kaffeemaschine 1 gezeigt, mit welcher neben Kaffee aufgrund des Vorsehens einer lösbar festgelegten Milchaufschäumvorrichtung 2 auch Kaffee/Milchprodukte wie Cappuccino, Milchkaffee, Latte Macchiato od.dgl. zubereitet werden können. Die Kaffeemaschine 1 umfasst in dem gezeigten Ausführungsbeispiel zwei Kaffeeauslässe 3, aus denen, je nach Ausgestaltung der Kaffeemaschine aus einer Kartusche (Kapsel) oder mittels einer Brüheinheit-Mahlwerkskombinationen aus frisch gemahlenen Kaffeebohnen hergestellter Kaffee in eine Tasse ausgegeben werden kann. Die Milchaufschäumvorrichtung 2 umfasst einen davon separaten Milchschaumauslass 4, aus welchem unmittelbar erhitzte Milch und/oder Milchschaum in die Tasse ausgegeben werden kann.

Die Milchaufschäumvorrichtung 2 ist wie erwähnt, lösbar im Auslassbereich der Kaffeemaschine 1 festgelegt, und zwar hinter einer nicht dargestellten Blende, welche die Milchaufschäumvorrichtung 2 im normalen Betrieb zumindest näherungsweise vollständig verdeckt.

Die Milchaufschäumvorrichtung 2 ist über einen Dampfanschluss 5 mit einer nicht gezeigten Dampfversorgungsleitung der Kaffeemaschine verbunden, wobei der Dampf über den Dampfanschluss 5 in eine Aufschäumkammer 6 und von dort aus weiter in Richtung Milchschaumauslass 4 strömen kann. Ebenfalls wirkverbunden ist die Milchaufschäumvorrichtung 2 mit der Kaffeemaschine 1 über einen Luftansauganschluss 7, über welchen eine einstellbare Luftmenge ansaugbar ist. Die Milchaufschäumvorrichtung 2 umfasst zudem eine Milchleitung 8, die wie später noch erläutert werden wird, Teil eines Quetschventils ist, wobei über die Milchleitung 8 Milch aus einem Milchbehälter gesaugt werden kann, und zwar in dem gezeigten Ausführungsbeispiel über das Venturiprinzip, indem in der Kaffeemaschine 1 erzeugter Dampf durch den Dampfanschluss 5 in die Milchaufschäumvorrichtung 2 einströmt und innerhalb dieser an einer der Milchleitung 8 zugeordneten Venturidüse vorbei, wodurch ein Unterdruck erzeugt wird, mit welchem die Milch angesaugt wird.

Ferner sind der Milchaufschäumvorrichtung 2 nicht gezeigte Detektionsmittel zugeordnet, mit denen festgestellt werden kann, ob sich die Milchaufschäumvorrichtung 2 korrekt in der in Fig. 1 gezeigten Montageposition befindet, aus welcher die Milchaufschäumvorrichtung 2 ohne Werkzeug entnommen werden kann.

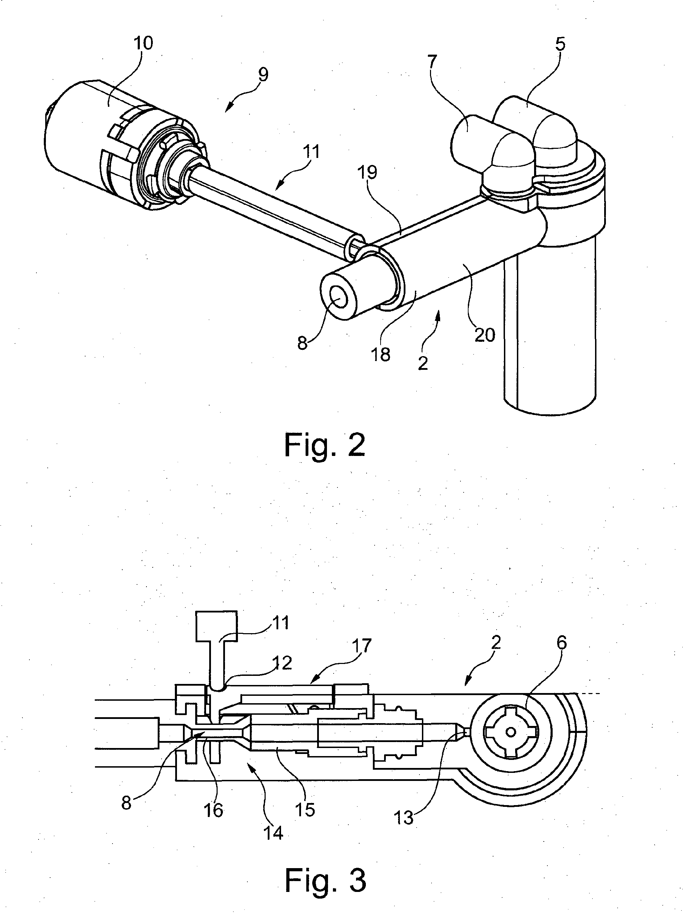

Fig. 2 zeigt nun die Milchaufschäumvorrichtung 2 gemäß Fig. 1 zusammen mit in Fig. 1 darstellungstechnisch verdeckten Aktormitteln 9 der Kaffeemaschine. Diese umfassen einen als Schrittmotor ausgebildeten Elektromotor 10, welcher ein Linearstellglied 11 translatorisch verstellbar antreibt, wobei das Linearstellglied 11 mit einem in Fig. 3 gezeigten Eingriffsbereich 12 der Milchaufschäumvorrichtung 2, die in Fig. 3 in einer Längsschnittansicht gezeigt ist, zusammenwirkt.

Aus Fig. 3 ist die vorerwähnte Venturidüse 13 zu erkennen, an welcher der Dampf vorbeiströmen kann, und durch welche dann aus der Milchleitung 8 Milch angesaugt wird.

Zur Einstellung der Durchflussmenge an Milch durch die Milchleitung 8, u.a. zur Beeinflussung der Milchtemperatur ist ein Quetschventil 14 vorgesehen, welches Bestandteil der Milchaufschäumvorrichtung 2 ist. Das Quetschventil 14 umfasst ein Silikonformteil 15, welches die Milchleitung 8 abschnittsweise ausbildet und welches in einem Deformationsabschnitt 16, durch Einwirkung der Aktormittel 9 deformierbar ist. Auf dem Deformationsabschnitt 16 kann unmittelbar ein um eine Schwenkachse schwenkbar angeordnetes Schwenkteil 17 verstellt werden, welches in Fig. 3 in einer Ausgangsposition dargestellt ist, in der es die Milchleitung 8 nicht definiert und in welche es aufgrund der Federwirkung des Elastomermaterials bzw. des Silikonformteils 15 selbsttätig wieder zurückverstellt wird, nachdem die Aktorkraftbeaufschlagung nachlässt.

Das Vorsehen des Schwenkteils 17 ist robuster als das Vorsehen eines Schiebeelements, welches die Funktionalität grundsätzlich auch erfüllen würde, welches aber tendenziell eher zum Verkanten neigt.

Bezüglich der Funktionalität des gezeigten Quetschventils 14 ist anzumerken, dass dieses mittels der Aktormittel 9 in unterschiedliche Positionen verstellbar ist, in welchem die Milchleitung 8 unterschiedlich stark deformiert ist. Die gezeigte Ausgangsstellung (Milchleitung komplett offen) ist optimal, um verbessert Milch ansaugen zu können, wobei es bevorzugt ist, dass nach erfolgreichem Ansaugevorgang eine Position angefahren wird, bei welcher das Schwenkteil 17 den Querschnitt der Milchleitung 8 teilweise verengt, um eine entsprechend warme Milchtemperatur zu erreichen. Grundsätzlich ist es möglich und bevorzugt, wenn über den Schrittmotor 10 für die Milchportionierung und Milchschaumportionierung unterschiedliche Stellungen angefahren werden können. Auch ist es möglich eine sogenannte Position "Spülen" einzustellen, bei welcher der freie Querschnitt der Milchleitung 8 bevorzugt auf null reduziert wird. In dieser vordersten Stellung werden die Aktormittel auf einen festen Anschlag referenziert. Diese Stellung ist vorteilhaft, wenn die Aufschäumkammer 6 mit Wasser gespült wird, so dass ein Eintritt von Wasser in Richtung Milchbehältnis vermieden wird.

Insbesondere aus Fig. 2 ergibt sich, dass ein Gehäuse 18 der Milchaufschäumvorrichtung 2 aus zwei Schalen 19, 20 gebildet ist, die sämtliche weiteren Bauteile fixieren bzw. positionieren. Somit wird eine für den Benutzer nicht zerlegbare Einheit geschaffen, die u.a. aufgrund der Ausgestaltung des Quetschventils für den Benutzer einfach reinigbar ist.

### Bezugszeichen

- 1: Kaffeemaschine
- 2: Milchaufschäumvorrichtung
- 3: Kaffeeauslass
- 4: Milchschaumauslass
- 5: Dampfanschluss
- 6: Aufschäumkammer
- 7: Luftansauganschluss
- 8: Milchleitung
- 9: Aktormittel
- 10: Elektromotor
- 11: Linearsteller
- 12: Eingriffsbereich
- 13: Venturidüse
- 14: Quetschventil
- 15: Silikonformteil
- 16: Deformationsabschnitt
- 17: Schwenkteil
- 18: Gehäuse
- 19: Gehäuseschale
- 20: Gehäuseschale

## Patentansprüche

1. Milchaufschäumvorrichtung zum Betreiben mit einer Kaffeemaschine (1), umfassend einen Dampfanschluss (5) zum Verbinden mit einer Dampfversorgungsleitung der Kaffeemaschine (1) sowie eine Milchleitung (8) zum Fördern von aufzuschäumender Milch zu Aufschäummitteln, wobei der Milchleitung (8) ein Ventil zur Einstellung der Durchflussmenge zugeordnet ist, das einen Eingriffsbereich (12) zum Zusammenwirken mit Aktormitteln (9) der Kaffeemaschine (1) zum Betätigen des Ventils aufweist, wobei
das Ventil als Quetschventil (14) ausgebildet ist, bei welchem die Milchleitung (8) zur Einstellung der Durchflussmenge durch Kraftbeaufschlagung mittels der Aktormittel (9) deformierbar und dadurch der Durchflussquerschnitt variierbar ist,
**dadurch gekennzeichnet,**
**dass** der Milchleitung (8) zu deren Deformierung ein Schwenkteil (17) zugeordnet ist, welches derart ausgebildet und angeordnet ist, dass dieses bei Kraftbeaufschlagung mittels der Aktormittel (9) um eine Schwenkachse relativ zu der Milchleitung (8) verschwenkbar ist.

2. Milchaufschäumvorrichtung nach Anspruch 1,
**dadurch gekennzeichnet,**
**dass** der Eingriffsbereich (12) für die Aktormittel (9) unmittelbar an dem Schwenkteil (17) ausgebildet ist.

3. Milchaufschäumvorrichtung nach einem der vorhergehenden Ansprüche,
**dadurch gekennzeichnet,**
**dass** das Schwenkteil (17) über, insbesondere von der Milchleitung (8) gebildete, Federmittel aus einer die Milchleitung (8) deformierenden Position in eine Ausgangsposition zurück verschwenkbar angeordnet ist.

4. Milchaufschäumvorrichtung nach einem der vorhergehenden Ansprüche,
**dadurch gekennzeichnet,**
**dass** das Schwenkteil (17) einen Gehäuseabschnitt der Milchschäumvorrichtung (2) bildet.

5. Milchaufschäumvorrichtung nach einem der vorhergehenden Ansprüche,
**dadurch gekennzeichnet,**
**dass** sich das Schwenkteil (17) in Richtung einer Längserstreckung der Milchleitung (8) erstreckt und dass die Schwenkachse des Schwenkteils (17) rechtwinklig zu dieser Längserstreckung ausgerichtet ist.

6. Milchaufschäumvorrichtung nach einem der vorhergehenden Ansprüche,
**dadurch gekennzeichnet,**
**dass** ein Deformationsabschnitt (16) der Milchleitung (8) eine geringere Wandstärke aufweist als ein benachbarter Milchleitungsabschnitt.

7. Milchaufschäumvorrichtung nach Anspruch 6,
**dadurch gekennzeichnet,**
**dass** der Deformationsabschnitt (16), insbesondere zusammen mit dem benachbarten Milchleitungsabschnitt von einem Formteil, insbesondere aus einem Elastomermaterial, bevorzugt aus Silikonmaterial, gebildet ist.

8. Milchaufschäumvorrichtung nach einem der vorhergehenden Ansprüche,
**dadurch gekennzeichnet,**
**dass** ein Gehäuse (18) der Milchaufschäumvorrichtung (2), bevorzugt genau, zwei Gehäuseschalen (19, 20) aufweist.

9. Kaffeemaschine (1) mit Dampferzeugungsmitteln, Aktormitteln (9) und einer Aufnahme zum lösbaren Festlegen einer Milchaufschäumvorrichtung (2) nach einem der vorhergehenden Ansprüche, derart, dass der Dampfanschluss (5) der Milchaufschäumvorrichtung (2) dampfleitend mit den Dampferzeugungsmitteln der Kaffeemaschine (1) verbunden und die Aktormittel (9) mit dem Eingriffsbereich (12) wirkverbunden oder bei Betätigung derselben wirkverbindbar sind.

10. Kaffeemaschine nach Anspruch 9,
**dadurch gekennzeichnet,**
**dass** die, bevorzugt einen Elektromotor (10), ganz besonders bevorzugt einen Schrittmotor, umfassenden Aktormittel (9) ein Linearstellglied zum Zusammenwirken mit dem Eingriffsbereich (12) des Quetschventils (14) der Milchaufschäumvorrichtung (2) aufweisen.

11. Kaffeemaschine nach Anspruch 10,
**dadurch gekennzeichnet,**
**dass** das Linearstellglied endseitig konvex oder konkav gerundet ausgebildet ist und mit einer konkaven bzw. konvexen Vertiefung des Eingriffsbereichs (12) zusammenwirkend angeordnet ist.

12. Kaffeemaschine nach einem der Ansprüche 9 bis 11,
**dadurch gekennzeichnet,**
**dass** die Aktormittel (9) über Steuermittel ansteuerbar sind, die die Aktormittel (9) in Abhängigkeit einer nutzerseitigen Vorgabe, insbesondere eines Reinigungsbefehls, eines Temperaturbefehls oder eines Milch- oder Schaumauswahlbefehls auf das Quetschventil (14) einwirkend ansteuernd ausgebildet sind.

13. Kaffeemaschine nach einem der Ansprüche 9 bis 12,
**dadurch gekennzeichnet,**
**dass** Detektionsmittel vorgesehen sind, die einen korrekten Sitz und/oder das Vorhandensein der Milchaufschäumvorrichtung (2) an der Kaffeemaschine (1) detektierend ausgebildet sind, und dass die Detektionsmittel signalleitend mit Steuermitteln der Kaffeemaschine (1) verbunden sind, die den Betrieb oder die Betreibbarkeit der Kaffeemaschine (1) bei inkorrektem Sitz der Milchaufschäumvorrichtung (2) oder bei demontierter Milchaufschäumvorrichtung (2) beeinträchtigend oder unterbindend ausgebildet sind.

14. Kaffeemaschine nach einem der Ansprüche 9 bis 13,
**dadurch gekennzeichnet,**
**dass** die Milchaufschäumvorrichtung (2) hinter einer, insbesondere abnehmbaren und/oder verstellbaren Blende lösbar anordenbar ist.

## Claims

1. A milk frothing device for operation with a coffee machine (1), comprising a steam connection (5) for connection to a steam supply line of the coffee machine (1), as well as a milk line (8) for conveying milk, which is to be frothed, to frothing means, wherein a valve for adjusting the through flow, which encompasses an engagement area (12) for interaction with actuator means (9) of the coffee machine (1) for operating the valve, is assigned to the milk line (8),
wherein
the valve is embodied as pinch valve (14), in the case of which the milk line (8) can be deformed by applying a force by means of the actuator means (9) for adjusting the through flow and the through flow cross section can thus be varied,
**characterized in**
**that** a pivot part (17), which is embodied and arranged such that it can be pivoted about a pivot axis relative to the milk line (8) in response to an application of force by means of the actuator means (9), is assigned to the milk line (8) for the deformation thereof.

2. The milk frothing device according to claim 1,
**characterized in**
**that** the engagement area (12) for the actuator means (9) is embodied directly at the pivot part (17).

3. The milk frothing device according to one of the preceding claims,
**characterized in**
**that** the pivot part (17) is arranged so as to be capable of being pivot from a position, which deforms the milk line (8), back into an initial position, via spring means, which are formed in particular by the milk line (8).

4. The milk frothing device according to one of the preceding claims,
**characterized in**
**that** the pivot part (17) forms a housing section of the milk frothing device (2).

5. The milk frothing device according to one of the preceding claims,
**characterized in**
**that** the pivot part (17) extends in the direction of a longitudinal extension of the milk line (8) and that the pivot axis of the pivot part (17) is oriented at right angles to this longitudinal extension.

6. The milk frothing device according to one of the preceding claims,
**characterized in**
**that** a deformation section (16) of the milk line (8) encompasses a smaller wall thickness than an adjacent milk line section.

7. The milk frothing device according to claim 6,
**characterized in**
**that** the deformation section (16) is formed by a molded part, in particular of an elastomer material, preferably of silicon material, in particular together with the adjacent milk line section.

8. The milk frothing device according to one of the preceding claims,
**characterized in**
**that** a housing (18) of the milk frothing device (2) encompasses preferably exactly two housing shells (19, 20) .

9. A coffee machine (1) comprising steam generation means, actuator means (9) and an accommodation for removably fixing a milk frothing device (2) according to one of the preceding claims such that the steam connection (5) of the milk frothing device (2) is connected to the steam generation means of the coffee machine (1) in a steam-guiding manner and such that the actuator means (9) are operatively connected to the engagement area (12) or can be operatively connected in response to the operation thereof.

10. The coffee machine according to claim 9,
**characterized in**
**that** the actuator means (19), which preferably comprise an electric motor (10), more preferably a step motor, encompass a linear actuator for interacting with the engagement area (12) of the pinch valve (14) of the milk frothing device (2).

11. The coffee machine according to claim 10,
**characterized in**
**that** the linear actuator is embodied so as to be rounded in a convex or concave manner at the end side and is arranged so as to interact with a concave or convex depression, respectively, of the engagement area (12).

12. The coffee machine according to one of claims 9 to 11,
**characterized in**
**that** the actuator means (9) can be controlled via control means, which are embodied so as to control the actuator means (9) as a function of a specification on the user side, in particular of a cleaning command, a temperature command or a milk or froth selection command, impacting the pinch valve (14).

13. The coffee machine according to one of claims 9 to 12,
**characterized in**
**that** provision is made for detection means, which are embodied so as to detect a correct fit and/or the presence of the milk frothing device (2) at the coffee machine (1) and that the detection means are connected in a signal-guiding manner to control means of the coffee machine (1), which are embodied so as to impact or prevent the operation or the operability of the coffee machine (1) in response to an incorrect fit of the milk frothing device (2) or if the milk frothing device (2) is removed.

14. The coffee machine according to one of claims 9 to 13,
**characterized in**
**that** the milk frothing device (2) can be arranged behind a baffle, which can in particular be detached and/or adjusted, so as to be capable of being removed.

## Revendications

1. Dispositif de production d'une émulsion de lait destiné à fonctionner avec une machine à café (1), comprenant un raccord à vapeur (5) destiné à être relié à une ligne d'alimentation en vapeur de la machine à café (1), ainsi qu'une conduite de lait (8) destinée à transporter le lait à émulsionner vers des moyens d'émulsion, dans lequel la conduite de lait (8) est dotée d'une soupape pour le réglage du débit, laquelle comporte une région d'intervention (12) destinée à coopérer avec des moyens d'actionnement (9) de la machine à café (1), pour l'actionnement de la soupape, dans lequel
la soupape est conçue comme une soupape déformable (14), avec laquelle la conduite de lait (8) peut être déformée par application d'une force à l'aide des moyens d'actionnement (9) pour le réglage du débit, permettant ainsi de varier la section transversale d'écoulement,
**caractérisé en ce que**
la conduite de lait (8) est dotée d'une partie pivotante (17) pour la déformation de celle-ci, laquelle est conçue et agencée de manière à pouvoir être pivotée autour d'un axe de pivotement par rapport à la conduite de lait (8) lors de l'application d'une force à l'aide des moyens d'actionnement (9).

2. Dispositif de production d'une émulsion de lait selon la revendication 1,
**caractérisé en ce que**
la région d'intervention (12) pour les moyens d'actionnement (9) est conçue directement sur la partie pivotante (17).

3. Dispositif de production d'une émulsion de lait selon l'une des revendications précédentes,
**caractérisé en ce que**
la partie pivotante (17) est agencée de manière à pouvoir revenir par pivotement dans une position initiale à partir d'une position déformant la conduite de lait (8), par des moyens élastiques formés en particulier par la conduite de lait (8).

4. Dispositif de production d'une émulsion de lait selon l'une des revendications précédentes,
**caractérisé en ce que**
la partie pivotante (17) forme une section de boîtier du dispositif de production d'une émulsion de lait (2) .

5. Dispositif de production d'une émulsion de lait selon l'une des revendications précédentes,
**caractérisé en ce que**
la partie pivotante (17) s'étend dans la direction d'une extension longitudinale de la conduite de lait (8), et **en ce que** l'axe de pivotement de la partie pivotante (17) est orienté à angle droit par rapport à cette extension longitudinale.

6. Dispositif de production d'une émulsion de lait selon l'une des revendications précédentes,
**caractérisé en ce**
**qu'**une section de déformation (16) de la conduite de lait (8) présente une épaisseur de paroi inférieure à celle d'une section de conduite de lait adjacente.

7. Dispositif de production d'une émulsion de lait selon la revendication 6,
**caractérisé en ce que**
la section de déformation (16), en particulier conjointement avec la section de conduite de lait adjacente, est formée par une pièce moulée, en particulier constituée d'un matériau élastomère, de préférence d'un matériau à base de silicone.

8. Dispositif de production d'une émulsion de lait selon l'une des revendications précédentes,
**caractérisé en ce**
**qu'**un boîtier (18) du dispositif de production d'une émulsion de lait (2) comporte, de préférence précisément, deux coques de boîtier (19, 20).

9. Machine à café (1) avec des moyens de production de vapeur, des moyens d'actionnement (9) et un logement pour la fixation détachable d'un dispositif de production d'une émulsion de lait (2) selon l'une des revendications précédentes, de manière à ce que le raccord à vapeur (5) du dispositif de production d'une émulsion de lait (2) soit relié aux moyens de production de vapeur de la machine à café (1) en guidant la vapeur, et à ce que les moyens d'actionnement (9) soient reliés ou, lors de l'activation de ceux-ci, puissent être reliés fonctionnellement à la région d'intervention (12).

10. Machine à café selon la revendication 9,
**caractérisée en ce que**
les moyens d'actionnement (9) comprenant de préférence un moteur électrique (10) et de façon tout particulièrement préférentielle un moteur pas-à-pas comportent un organe de réglage linéaire destiné à coopérer avec la région d'intervention (12) de la soupape déformable (14) du dispositif de production d'une émulsion de lait (2).

11. Machine à café selon la revendication 10,
**caractérisée en ce que**
l'organe de réglage linéaire est conçu de manière arrondie de façon convexe ou concave à son extrémité, tout en étant agencé de façon à coopérer avec un renfoncement concave ou convexe de la région d'intervention (12).

12. Machine à café selon l'une des revendications 9 à 11,
**caractérisée en ce que**
les moyens d'actionnement (9) peuvent être commandés par des moyens de commande conçus de manière à commander les moyens d'actionnement (9) en fonction d'une instruction côté utilisateur, en particulier d'un ordre de nettoyage, d'un ordre de température ou d'un ordre de sélection de mousse ou de lait, en agissant sur la soupape déformable (14) .

13. Machine à café selon l'une des revendications 9 à 12,
**caractérisée en ce**
**qu'**il est prévu des moyens de détection conçus de manière à détecter le positionnement correct et/ou la présence du dispositif de production d'une émulsion de lait (2) sur la machine à café (1), et en ce que les moyens de détection sont reliés à des moyens de commande de la machine à café (1) avec transmission de signaux, lesquels sont conçus de manière à entraver ou empêcher le fonctionnement ou la capacité de fonctionnement de la machine à café (1) en cas de positionnement incorrect du dispositif de production d'une émulsion de lait (2) ou lorsque le dispositif de production d'une émulsion de lait (2) est démonté.

14. Machine à café selon l'une des revendications 9 à 13,
**caractérisée en ce que**
le dispositif de production d'une émulsion de lait (2) peut être agencé de façon détachable derrière un cache, en particulier amovible et/ou réglable.
